(19) Europäisches Patentamt / European Patent Office / Office européen des brevets

(11) **EP 4 604 545 A1**

(12) **EUROPEAN PATENT APPLICATION**
published in accordance with Art. 153(4) EPC

(43) Date of publication:
20.08.2025 Bulletin 2025/34

(21) Application number: 23877722.1

(22) Date of filing: 12.10.2023

(51) International Patent Classification (IPC):
H04N 19/60 (2014.01)    H04N 19/18 (2014.01)
H04N 19/122 (2014.01)    H04N 19/132 (2014.01)
H04N 19/176 (2014.01)

(52) Cooperative Patent Classification (CPC):
H04N 19/122; H04N 19/132; H04N 19/176;
H04N 19/18; H04N 19/60

(86) International application number:
PCT/KR2023/015766

(87) International publication number:
WO 2024/080799 (18.04.2024 Gazette 2024/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.10.2022  US 202263415621 P

(71) Applicant: LG Electronics Inc.
Yeongdeungpo-gu
Seoul 07336 (KR)

(72) Inventors:
• KOO, Moonmo
  Seoul 06772 (KR)
• ZHAO, Jie
  Seoul 06772 (KR)
• LIM, Jaehyun
  Seoul 06772 (KR)
• KIM, Seunghwan
  San Diego, California 92131 (US)

(74) Representative: Maikowski & Ninnemann
Patentanwälte Partnerschaft mbB
Postfach 15 09 20
10671 Berlin (DE)

(54) **VIDEO ENCODING/DECODING METHOD AND DEVICE, AND RECORDING MEDIUM FOR STORING BITSTREAM**

(57)    A video decoding method and device disclosed herein may: derive transform coefficients of the current block from a bitstream; perform at least one of inverse quantization or inverse transform on the transform coefficients of the current block and derive residual samples of the current block; and recover the current block on the basis of the residual samples of the current block. Here, the inverse transform is performed on the basis of a length-based transform kernel, and the length-based transform kernel may include at least one of the horizontal transform kernel having the same length as the width of the current block or the vertical transform kernel having the same length as the height of the current block.

FIG.4

```
┌─────────────────────────────────┐
│   DERIVE TRANSFORM COEFFICIENTS  │ ～ S400
│        OF CURRENT BLOCK          │
└─────────────────────────────────┘
              ↓
┌─────────────────────────────────┐
│   DERIVE RESIDUAL SAMPLES BASED ON│ ～ S410
│ TRANSFORM COEFFICIENTS OF CURRENT BLOCK│
└─────────────────────────────────┘
              ↓
┌─────────────────────────────────┐
│ RECONSTRUCT CURRENT BLOCK BASED ON│ ～ S420
│  RESIDUAL SAMPLES OF CURRENT BLOCK│
└─────────────────────────────────┘
```

EP 4 604 545 A1

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure seeks to provide a method and apparatus for configuring a predetermined transform set for (inverse) transform of a current block.

The present disclosure seeks to provide a method and apparatus for determining one or more transform kernel candidates for a current block.

The present disclosure provides a method and apparatus for signaling an index related to a transform kernel of a current block.

[Technical Solution]

The image decoding method and apparatus according to the present disclosure may derive transform coefficients of a current block from a bitstream, perform at least one of dequantization or inverse transform on the transform coefficients of the current block to derive residual samples of the current block, and reconstruct the current block based on the residual samples of the current block. Here, the inverse transform may be performed based on a length-based transform kernel. The length-based transform kernel may include at least one of a horizontal transform kernel having a length equal to a width of the current block or a vertical transform kernel having a length equal to a height of the current block.

In the image decoding method and apparatus according to the present disclosure, the length-based transform kernel may be a non-trigonometric function-based transform kernel.

In the image decoding method and apparatus according to the present disclosure, when the width and height of the current block are equal to each other, the horizontal transform kernel applied to the horizontal direction of the current block may be the same transform kernel as the vertical transform kernel applied to the vertical direction of the current block.

In the image decoding method and apparatus according to the present disclosure, when the width and height of the current block are equal to each other, the horizontal transform kernel applied in the horizontal direction of the current block may have the same length as the vertical transform kernel applied in the vertical direction of the current block, but may be a transform kernel different from the vertical transform kernel.

In the image decoding method and apparatus according to the present disclosure, the length-based transform kernel may be assigned to allowable widths or allowable heights for a transform block, respectively.

In the video decoding method and apparatus according to the present disclosure, allowable widths or allowable heights for a transform block are divided into a plurality of groups based on at least one threshold, and the length-based transform kernel may be assigned to each of the plurality of groups.

In the image decoding method and apparatus according to the present disclosure, when the width or height of the current block is equal to a pre-defined length, the horizontal transform kernel or the vertical transform kernel is not applied to the current block, and the pre-defined length may be at least one of 4, 8, 16 or 32.

In the image decoding method and apparatus according to the present disclosure, when the width and height of the current block are not equal and the width of the current block is equal to the pre-defined length, a horizontal transform kernel having a length equal to the width of the current block is not applied to the current block, and a vertical transform kernel having a length equal to the height of the current block may be applied to the current block.

In the image decoding method and apparatus according to the present disclosure, when the width and height of the current block are not equal and the width of the current block is equal to the pre-defined length, the length-based transform kernel may not be applied to the current block.

The video encoding method and apparatus according to the present disclosure may derive residual samples of a current block, derive transform coefficients of the current block by performing at least one of transform or quantization on the residual samples of the current block, and encoding the transform coefficients of the current block. The transform may be performed based on a length-based transform kernel. The length-based transform kernel may include at least one of a horizontal transform kernel having a length equal to a width of the current block or a vertical transform kernel having a length equal to a height of the current block.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and a device for transmitting video/image information generated according to an image encoding method according to the present disclosure are provided.

[Advantageous Effects]

According to the present disclosure, the performance of transform can be improved by configuring a transform set including various transform kernel candidates.

The present disclosure can improve the performance of transform by additionally using a non-trigonometric function-based transform kernel in addition to a trigonometric function-based transform kernel.

The present disclosure can improve the encoding efficiency of transform-related information by effectively signaling an index related to a transform kernel of a current block.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 illustrates an image decoding method performed by a decoding apparatus (300) as an embodiment according to the present disclosure.

FIG. 5 exemplarily shows intra prediction modes and prediction directions thereof according to the present disclosure.

FIG. 6 illustrates a schematic configuration of a decoding apparatus (300) that performs an image decoding method according to the present disclosure.

FIG. 7 illustrates an image encoding method performed by an encoding apparatus (200) according to an embodiment of the present disclosure.

FIG. 8 illustrates a schematic configuration of an encoding apparatus (200) that performs an image encoding method according to the present disclosure.

FIG. 9 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

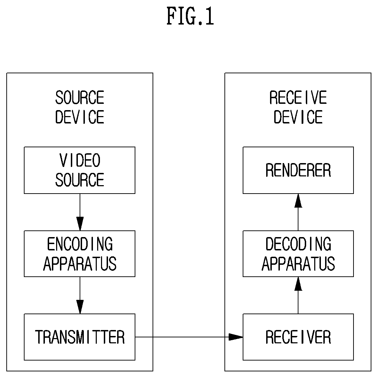

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

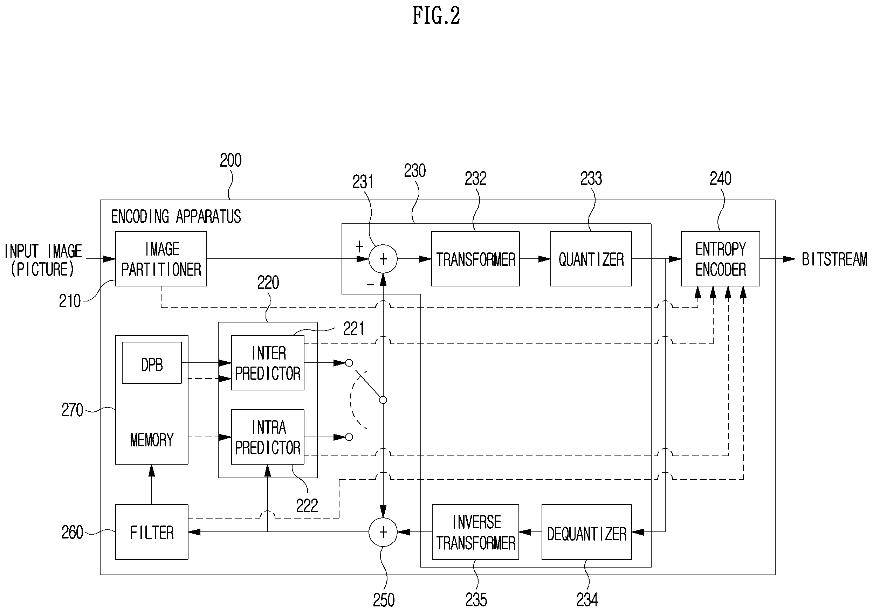

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

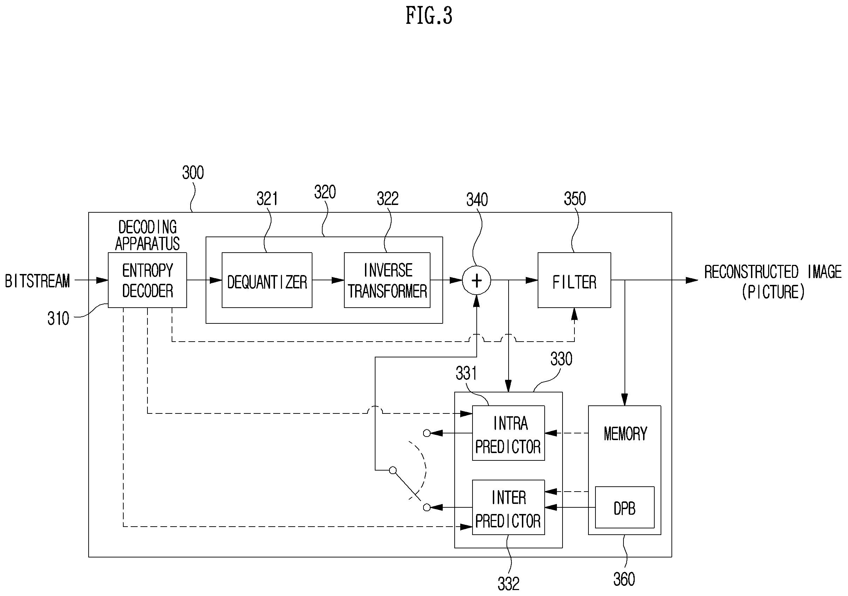

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

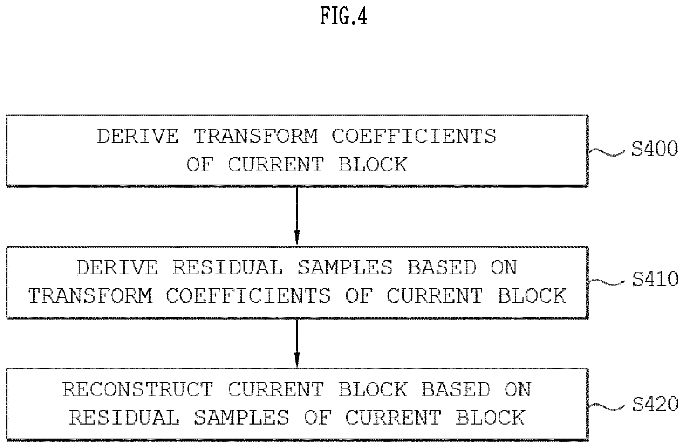

FIG. 4 illustrates an image decoding method performed by a decoding apparatus (300) as an embodiment according to the present disclosure.

Referring to FIG. 4, transform coefficients of the current block may be derived from the bitstream (S400). That is, the bitstream may include residual information of the current block, and the transform coefficients of the current block may be derived by decoding the residual information.

Referring to FIG. 4, residual samples of the current block may be derived by performing at least one of dequantization and inverse transform on the transform coefficients of the current block (S410).

When Adaptive Multiple Transform Selection (MTS) is applied, the inverse transform may be performed based on at least one of DCT-2, DST-7, or DCT-8. Here, DCT-2, DST-7, DCT-8, etc. may be called a transform type, a transform kernel, or a transform core.

In the present disclosure, the inverse transform may mean a separable transform. However, it is not limited thereto, and the inverse transform may mean a non-separable transform, or may be a concept including a separable transform and a non-separable transform. In addition, the inverse transform in the present disclosure means a primary transform, but is not limited thereto, and may be applied to a secondary transform by being modified into an identical/similar form.

For example, as a method for inverse transform, only DCT-2 and a non-separable transform may be used, or a non-separable transform may be used in addition to at least one of DCT-2, DST-7, or DCT-8, or a non-separable transform may replace the transform kernel of one or more of DCT-2, DST-7, or DCT-8.

As a more specific embodiment, when there are (DCT-2, DCT-2), (DST-7, DST-7), (DCT-8, DST-7), (DST-7, DCT-8), (DCT-8, DCT-8) as transform kernel candidates for a separable transform, a non-separable transform may replace or be added to one or more of the five transform kernel candidates. Here, the notation (transform1, transform2) indicates that transform1 is applied in the horizontal direction and transform2 is applied in the vertical direction. When the non-separable transform replaces some of the transform kernel candidates, the remaining transform kernel candidates except (DCT-2, DCT-2) and (DST-7, DST-7) may be replaced with the non-separable transform. However, the above-described transform kernel candidates are only examples, and other types of DCT and/or DST may be included, and a transform skip may be included as the transform kernel candidate.

A non-separable transform may mean a transform or inverse transform based on a non-separable transform matrix. That is, unlike a separable transform that performs horizontal and vertical transforms independently by separating vertical and horizontal transforms, a non-separable transform may perform horizontal and vertical transforms at once.

For example, when a non-separable transform is performed on a 4x4 block, the input data X to the non-separable transform is as shown in the following equation 1.

$$[\text{Equation } 1]$$

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

When the input data X is expressed in vector form, vector X' may be expressed as follows.

$$[\text{Equation } 2]$$

$$X' = [X_{00}, X_{01}, X_{02}, X_{03}, X_{10}, X_{11}, X_{12}, X_{13}, X_{20}, X_{21}, X_{22}, X_{23}, X_{30}, X_{31}, X_{32}, X_{33}]^T$$

In this case, the non-separable transform may be performed as in the following equation 3.

$$[\text{Equation } 3]$$

$$F = T \cdot X'$$

In equation 3, F represents a transform coefficient vector, T represents a 16x16 non-separable transform matrix, and • represents the multiplication of a matrix and a vector.

A 16x1 transform coefficient vector F may be derived through the equation 3, and the F may be reconfigured into 4x4 blocks according to a predetermined scan order. The scan order may be a horizontal scan, a vertical scan, a diagonal scan, a z-scan, a raster scan, or a pre-defined scan.

The non-separable transform set and/or transform kernel for the non-separable transform may be variously configured based on at least one of a prediction mode (e.g., intra mode, inter mode, etc.), the width, height, or number of pixels of the current block, the position of a sub-block within the current block, explicitly signaled syntax elements, statistical characteristics of neighboring samples, whether a secondary transform is used, or a quantization parameter (QP).

Specifically, for the intra mode, the pre-defined intra prediction modes may be grouped to correspond to n non-separable transform sets, and each non-separable transform set may include k transform kernel candidates. Here, n and k may be arbitrary constants according to rules (conditions) defined identically for the encoding apparatus and the decoding apparatus.

The number of non-separable transform sets and/or the number of transform kernel candidates included in the non-separable transform set may be configured differently depending on the width and/or height of the current block. For example, for a 4x4 block, $n_1$ non-separable transform sets and $k_1$ transform kernel candidates may be configured. For a 4x8 block, $n_2$ non-separable transform sets and $k_2$ transform kernel candidates may be configured. In addition, the number of non-separable transform sets and the number of transform kernel candidates included in each non-separable transform set may be configured differently depending on the product of the width and the height of the current block. For example, when the product of the width and the height of the current block is equal to or greater than 256, $n_3$ non-separable transform sets and $k_3$ transform kernel candidates may be configured, and otherwise, $n_4$ non-separable transform sets and $k_4$ transform kernel candidates may be configured. That is, since the degree of change in the statistical characteristics of the residual signal varies depending on the block size, the number of non-separable transform sets and transform kernel candidates may be configured differently to reflect this.

When the current block is divided into a plurality of sub-blocks, the statistical characteristics of the residual signal may be different for each sub-block, and therefore the number of non-separable transform sets and transform kernel candidates may be configured differently. For example, when a 4x8 or 8x4 block is divided into two 4x4 sub-blocks and a non-separable transform is applied to each sub-block, $n_5$ non-separable transform sets and $k_5$ transform kernel candidates may be configured for the top-left 4x4 sub-block, and $n_6$ non-separable transform sets and $k_6$ transform kernel candidates may be configured for other 4x4 sub-blocks.

Based on the explicitly signaled syntax element, the number of non-separable transform sets and transform kernel candidates may be differently configured. As the syntax element, information indicating one of a plurality of non-separable transform configurations may be used. For example, when three kinds of non-separable transform configurations are supported (i.e., $n_7$ non-separable transform sets and $k_7$ transform kernel candidates, $n_8$ non-separable transform sets and $k_8$ transform kernel candidates, $n_9$ non-separable transform sets and $k_9$ transform kernel candidates), the syntax element may have values of 0, 1, and 2, and the non-separable transform configuration applied to the current block may be determined based on the value of the signaled syntax element.

Based on whether a secondary transform is applied and/or which secondary transform is applied, the number of non-separable transform sets and transform kernel candidates may be configured differently. For example, when a secondary transform is not applied, a non-separable transform configuration including $n_{10}$ non-separable transform sets and $k_{10}$ transform kernel candidates may be applied. When a secondary transform is applied, a non-separable transform configuration including $n_{11}$ non-separable transform sets and $k_{11}$ transform kernel candidates may be applied.

Based on the quantization parameter (QP) and/or the range to which the QP value belongs, different non-separable transform configurations may be applied. For example, when the QP value has a small value, a non-separable transform configuration including $n_{12}$ non-separable transform sets and $k_{12}$ transform kernel candidates may be applied. On the other hand, when the QP value has a large value, a non-separable transform configuration including $n_{13}$ non-separable transform sets and $k_{13}$ transform kernel candidates may be applied. When the QP value is less than or equal to a threshold (e.g., 32), the case is classified as having a small QP value, and otherwise, the case is classified as having a large QP value. Alternatively, the range of the QP values may be divided into three or more, and different non-separable transform configurations may be applied for each range.

For relatively large blocks, instead of using a non-separable transform corresponding to the width and height of the block, the block may be divided into a plurality of sub-blocks and a non-separable transform corresponding to the width and height of the sub-block may be used. For example, when performing a non-separable transform for a 4x8 block, the 4x8 block may be divided into two 4x4 sub-blocks and a 4x4 block-based non-separable transform may be used for each of the 4x4 sub-blocks. Alternatively, an 8x16 block may be divided into two 8x8 sub-blocks and an 8x8 block-based non-separable transform may be used.

The non-separable transform set may be determined based on the intra prediction mode of the current block and the mapping table. The mapping table may define a mapping relationship between the pre-defined intra prediction modes and the non-separable transform sets. The pre-defined intra prediction modes may include two non-directional modes and 65 directional modes. In general, the non-separable transform has a larger transform kernel size than the separable transform. This means that the computational complexity required for the transform process is high and the memory required for storing the transform kernel is large. Meanwhile, while the separable transform may only consider statistical characteristics existing in the horizontal and/or vertical directions, the non-separable transform may simultaneously consider statistical characteristics in a two-dimensional space including the horizontal and vertical directions, thereby providing better compression efficiency. Since the statistical characteristics and diversity of the residual are different depending on the directionality of the intra prediction mode, there may be cases where the non-separable transform is absolutely necessary, and there may exist intra prediction modes where the characteristics of the residual may be sufficiently identified by the separable transform alone. Therefore, by predefining which transform to use based on to the intra prediction mode in the encoding apparatus and the decoding apparatus, the transform process may be designed with optimized complexity and memory requirements. The non-directional mode may include the planar mode of number 0 and the DC mode of number 1, and the directional mode may include the intra prediction modes of numbers 2 to 66. However, this is merely an example, and the present disclosure may also be applied to cases where the number of pre-defined intra prediction modes is different.

Due to the application of wide angle intra prediction (WAIP), the pre-defined intra prediction modes may further include intra prediction modes from -14 to -1 and intra prediction modes from 67 to 80.

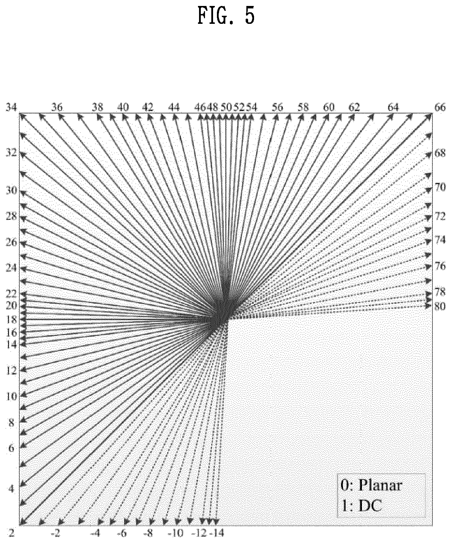

FIG. 5 exemplarily shows intra prediction modes and prediction directions thereof according to the present disclosure. Referring to FIG. 5 , modes -14 to -1 and 2 to 33 and modes 35 to 80 are symmetrical with respect to mode 34 in terms of prediction direction. For example, modes 10 and 58 are symmetrical with respect to the direction corresponding to mode 34, and mode -1 is symmetrical with mode 67. Accordingly, for a vertical directionality mode symmetrical to a horizontal directionality mode with respect to mode 34, the input data may be transposed and used. Transposing the input data means that the rows and columns in the input data MxN of a two-dimensional block become columns and rows, respectively, to form NxM data.

For example, when a 4x4 block is used, 16 data forming a 4x4 block may be appropriately arranged to form a 16x1 1-dimensional vector for non-separable transform. In this case, the 1-dimensional vector may be formed in row-first order or in column-first order. The residual samples resulting from the non-separable transform may be arranged in the above order to form a 2-dimensional block.

For modes -14 to -1 and 2 to 33, when the data arrangement order for forming a 16x1 input vector is row-first order, for modes 35 to 80, the input vector may be formed according to column-first order.

Mode 34 may be regarded as neither a horizontal directionality mode nor a vertical directionality mode, but in this disclosure, it is classified as belonging to a horizontal directionality mode. That is, for modes -14 to -1 and 2 to 33, the input data arrangement method for the horizontal directionality mode, i.e., the row-first order, is used, and for the vertical directionality mode symmetrical with respect to mode 34, the input data may be transposed and used.

For non-square blocks, the symmetry in square blocks (i.e., the symmetry between the mode P and the mode (68-P) in an NxN block (2<=P<=33) or the symmetry between the mode Q and the mode (66-Q) (-14<=Q<=-1)) cannot be utilized. Therefore, in addition to the symmetry based only on the intra prediction mode, the symmetry between block shapes that are in a transpose relationship with each other, i.e., the symmetry between a KxL block and an LxK block, may also be utilized. Specifically, a symmetry relationship exists between a KxL block predicted by the mode P and an LxK block predicted by the mode (68-P). Alternatively, a symmetry relationship exists between a KxL block predicted by the mode Q and an LxK block predicted by the mode (66-Q).

Since a KxL block having mode 2 and an LxK block having mode 66 can be seen as symmetrical to each other, the same transform kernel may be applied to the KxL block and the LxK block. If a non-separable transform set for the intra prediction mode of the KxL block is mapped, in order to apply a non-separable transform to the LxK block, the non-separable transform set may be derived through a mapping table corresponding to the KxL block based on the mode (68-P) instead of the mode P applied to the LxK block. Alternatively, the non-separable transform set may be derived through a mapping table corresponding to the KxL block based on the mode (66-Q) instead of the mode Q applied to the LxK block.

For example, in order to apply a non-separable transform to an LxK block, the non-separable transform set may be selected based on mode 2 instead of mode 66. In addition, for a KxL block, the input data may be read in a pre-determined order (e.g., row-first order or column-first order) to form a one-dimensional vector and then the corresponding non-separable transform may be applied. For an LxK block, the input data may be read in the transposed order to form a one-dimensional vector and then the corresponding non-separable transform may be applied. That is, when the KxL block is read in row-first order, the LxK block may be read in column-first order. Conversely, when the KxL block is read in column-first order, the LxK block may be read in row-first order.

In addition, when mode 34 is applied to the KxL block, a non-separable transform set may be determined based on mode 34, and the input data may be read in a pre-determined order to form a one-dimensional vector and perform the corresponding non-separable transform. When mode 34 is applied to the LxK block, a non-separable transform set may be determined based on mode 34, but the input data may be read in a transposed order to form a one-dimensional vector and perform the corresponding non-separable transform.

In the present disclosure, a method for determining a non-separable transform set and a method for forming input data are described based on a KxL block. However, the non-separable transform may be performed based on an LxK block by utilizing the symmetry described above for a KxL block. Alternatively, a block having a width greater than a height may be restricted to be used as a reference block. Alternatively, the symmetry may be restricted not to be utilized in the case of non-square blocks. In this case, a non-square block may use a different number of non-separable transform sets and/or transform kernel candidates than a square block, and may select a non-separable transform set using a different mapping table than a square block.

An example of a mapping table for selecting a non-separable transform set is as follows:

[Table 1]

| predModeIntra | TrSetIdx |
|---|---|
| predModeIntra < 0 | 4 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |
| 67 <= predModeIntra <= 80 | 4 |

Table 1 shows an example of assigning a non-separable transform set for each intra prediction mode when there are five non-separable transform sets. The value of predModeIntra means the value of the intra prediction mode considering WAIP, and TrSetIdx is an index indicating a specific non-separable transform set. In Table 1, it may be confirmed that the same non-separable transform set is applied to modes located in symmetrical directions according to the intra prediction mode. Table 1 is only an example of using five non-separable transform sets, and does not limit the total number of non-separable transform sets for non-separable transform.

Alternatively, as shown in Table 2, the non-separable transform may not be applied to WAIP for compression performance.

[Table 2]

| predModeIntra | TrSetIdx |
|---|---|
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |

Alternatively, as shown in Table 3, instead of configuring a separate non-separable transform set for WAIP, a non-separable transform set corresponding to an adjacent intra prediction mode may be shared.

[Table 3]

| predModeIntra | TrSetIdx |
|---|---|
| predModeIntra < 0 | 1 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 80 | 1 |

The non-separable transform set may include a plurality of transform kernel candidates, and one of the plurality of transform kernel candidates may be selectively used. For this purpose, an index signaled through a bitstream may be used. Alternatively, one of the plurality of transform kernel candidates may be implicitly determined based on context information of a current block. Here, the context information may mean a size of a current block or whether a non-separable transform is applied to a neighboring block. Here, the size of the current block may be defined as a width, a height, a maximum/minimum value of the width and the height, a sum of the width and the height, or a product of the width and the height.

Below, a method of determining the transform kernel for the inverse transform of the current block will be described in detail.

Embodiment 1

As described above, the inverse transform may be divided into a separable transform and a non-separable transform. The separable transform means performing transform in the horizontal direction and the vertical direction respectively for a two-dimensional block, and the non-separable transform may mean performing a single transform for samples constituting the entire or a part of the two-dimensional block. When expressing the separable transform, it may be expressed as a pair of a horizontal transform kernel and a vertical transform kernel, and in the present disclosure, it will be expressed as (horizontal transform kernel, vertical transform kernel).

A plurality of transform sets may be defined for the inverse transform of the current block. Each transform set may include one or more transform kernel candidates.

For example, one of (DST-7, DST-7), (DCT-8, DST-7), (DST-7, DCT-8), or (DCT-8, DCT-8) may be applied as a separable transform, and the above four transform kernel candidates may be regarded as one transform set. In addition, (DCT-2, DCT-2) may be regarded as one transform set. A transform skip that does not apply a transform may also be regarded as one transform set, and (DCT-2, DCT-2) and the transform skip may be regarded as one transform set. In the present disclosure, a transform kernel may refer to one transform (e.g., DCT-2, DST-7) or may refer to two transform pairs (e.g., (DCT-2, DCT-2)).

As another example of a transform set, there may be the above-described non-separable transform set. In the present disclosure, a non-separable transform applied as a primary transform may be denoted as a Non-Separable Primary Transform (NSPT). In NSPT, a plurality of non-separable transform sets may be configured, and each non-separable transform set may include one or more transform kernels as transform kernel candidates. In the case of NSPT, one of the plurality of non-separable transform sets is selected based on the intra prediction mode, and the plurality of non-separable transform sets for NSPT may be denoted as an NSPT set list. This is as described above, and a detailed description thereof will be omitted here.

A group of one or more transform sets available for a current block may be configured from a plurality of pre-defined transform sets. The group of one or more transform sets may be configured in a predetermined area unit to which the current block belongs, and is hereinafter referred to as a collection. Here, the predetermined area unit may be at least one of a picture, a slice, a coding tree unit row (CTU row), or a coding tree unit (CTU).

For example, a transform set consisting of (DCT-2, DCT-2) is called $S_1$, and a transform set consisting of (DST-7, DST-7), (DCT-8, DST-7), (DST-7, DCT-8), and (DCT-8, DCT-8) is called $S_2$. In addition, the above-described NSPT set list may include N non-separable transform sets, and the N non-separable transform sets are called $S_{3,1}$, $S_{3,2}$, ..., $S_{3,N}$, respectively. Here, N may be 35, but is not limited thereto.

When S3,13 is selected as the non-separable transform set for NSPT based on the intra prediction mode of the current block, the transform kernel applicable to the current block may belong to one of $S_1$, $S_2$, or $S_{3,13}$. In this case, the collection available for the current block may be denoted as {$S_1$, $S_2$, $S_{3,13}$}.

As described above, since a collection according to the present disclosure is a group of one or more transform sets available for a current block, the collection may be configured differently based on the context of the current block. Here, the context may include at least one of a shape, a size, or an intra prediction mode. If a total of K contexts are defined, K collections may be generated, and each collection may be denoted as Ci (i=1, 2, ..., N). For example, when the sizes of blocks to which NSPT is applicable are 4x4, 8x8, 16x16, and 32x32 and one of a total of 35 non-separable transform sets is selected based on the intra prediction mode, a total of 4 x 35 = 140 contexts may be defined if different transform kernels are applied for each size of the block.

A collection may be configured based on the context of the current block, and in this case, a process of selecting one of a plurality of transform sets belonging to the collection and selecting one of a plurality of transform kernel candidates belonging to the selected transform set may be performed. Here, the selection of the transform set and the transform kernel candidate may be performed implicitly based on the context of the current block, or may be performed based on an explicitly signaled index.

Alternatively, the process of selecting one of a plurality of transform sets belonging to the collection and the process of selecting one of a plurality of transform kernel candidates belonging to the selected transform set may be performed separately. For example, an index for selecting a transform set may be first signaled, and one of a plurality of transform sets belonging to the collection may be selected based on the index. Then, an index indicating one of a plurality of transform kernel candidates belonging to the transform set may be signaled, and one of the transform kernel candidates may be selected from the transform set based on the signaled index. The transform kernel of the current block may be determined based on the selected transform kernel candidate. Alternatively, selection of one transform set from the collection may be performed implicitly based on the context of the current block, and selection of one transform kernel candidate from the selected transform set may be performed based on a signaled index. Alternatively, selection of one transform set from the collection may be performed based on a signaled index, and selection of one transform kernel candidate from the selected transform set may be performed implicitly based on the context of the current block. Alternatively, selection of one transform set from the collection may be performed implicitly based on the context of the current block, and selection of one transform kernel candidate from the selected transform set may also be performed implicitly based on the context of the current block.

Of course, when the number of transform sets belonging to the collection is 1, the index for selecting the transform set may not be signaled. Similarly, when the number of transform kernel candidates belonging to the selected transform set is 1, the index for indicating the transform kernel candidate may not be signaled.

Alternatively, an index indicating one of all transform kernel candidates belonging to the current collection may be signaled. In this case, the process of selecting one transform set from the collection may be omitted. In this case, all transform sets belonging to the collection may be shuffled in consideration of priorities. For example, in the case of assigning small-length binary codes to small-value indices, such as truncated unary codes, it may be advantageous to assign small-value indices to transform kernel candidates that are more advantageous for improving coding performance. When shuffling all transform kernel candidates belonging to the collection in accordance with priorities, different shuffling may be applied to each collection. In addition, instead of shuffling all transform kernel candidates belonging to the collection, only some of them may be selectively shuffled.

Embodiment 2

The transform kernel for the inverse transform of the current block may be determined based on MTS (Multiple Transform Selection).

The MTS according to the present disclosure may use at least one of DST-7, DCT-8, DCT-5, DST-4, DST-1, or IDT (identity transform) as a transform kernel. In addition, the MTS according to the present disclosure may further include a transform kernel of DCT-2.

In the present disclosure, a plurality of MTS sets for MTS may be defined. Based on the size and/or an intra prediction mode of a current block, one of the plurality of MTS sets may be determined. For example, in determining one MTS set, 16 transform block sizes may be considered, and for a directional mode, the shape of the transform block and the symmetry between the intra prediction modes may be considered. For the WAIP (Wide Angle Intra Prediction) mode (i.e., -1 to - 14 (or -15), 67 to 80 (or 81)), an MTS set corresponding to mode 2 may be applied for modes -1 to -14 (or -15), and an MTS set corresponding to mode 66 may be applied for modes 67 to 80 (or 81). A separate MTS set may be assigned for the MIP (Matrix-based Intra Prediction) mode.

For example, an MTS set according to transform block size and intra prediction mode may be assigned/defined as shown in Table 4 below.

[Table 4]

| Block size | | Intra prediction mode | | | | |
|---|---|---|---|---|---|---|
| width | height | [0, 1] | [2, 12] | [13, 23] | [24, 34] | MIP |
| 4 | 4 | 0 | 1 | 2 | 3 | 4 |
| 4 | 8 | 5 | 6 | 7 | 8 | 9 |
| 4 | 16 | 10 | 11 | 12 | 13 | 14 |
| 4 | 32 | 15 | 16 | 17 | 18 | 19 |
| 8 | 4 | 20 | 21 | 22 | 23 | 24 |
| 8 | 8 | 25 | 26 | 27 | 28 | 29 |
| 8 | 16 | 30 | 31 | 32 | 33 | 34 |
| 8 | 32 | 35 | 36 | 37 | 38 | 39 |
| 16 | 4 | 40 | 41 | 42 | 43 | 44 |
| 16 | 8 | 45 | 46 | 47 | 48 | 49 |
| 16 | 16 | 50 | 51 | 52 | 53 | 54 |
| 16 | 32 | 55 | 56 | 57 | 58 | 59 |
| 32 | 4 | 60 | 61 | 62 | 63 | 64 |
| 32 | 8 | 65 | 66 | 67 | 68 | 69 |
| 32 | 16 | 70 | 71 | 72 | 73 | 74 |
| 32 | 32 | 75 | 76 | 77 | 78 | 79 |

Table 4 shows the assignment of MTS sets according to 16 transform block sizes and intra prediction modes. The number of pre-defined MTS sets is 80, and the index indicating one of the 80 MTS sets may have a value from 0 to 79, as shown in Table 4.

[Table 5]

| MTS set index | Transform kernel candidate index | | | | | |
|---|---|---|---|---|---|---|
| | 0 | 1 | 2 | 3 | 4 | 5 |
| 0 | 18 | 24 | 17 | 23 | 8 | 12 |
| 1 | 18 | 3 | 7 | 22 | 0 | 16 |
| 2 | 18 | 2 | 17 | 22 | 3 | 23 |
| 3 | 18 | 3 | 15 | 17 | 12 | 23 |
| 4 | 18 | 12 | 3 | 19 | 10 | 13 |
| 5 | 18 | 12 | 19 | 23 | 13 | 24 |

(continued)

| MTS set index | Transform kernel candidate index | | | | | |
|---|---|---|---|---|---|---|
| | 0 | 1 | 2 | 3 | 4 | 5 |
| 6 | 18 | 12 | 17 | 2 | 3 | 23 |
| 7 | 18 | 2 | 17 | 22 | 12 | 23 |
| 8 | 18 | 2 | 11 | 17 | 22 | 23 |
| 9 | 18 | 12 | 19 | 23 | 3 | 10 |
| 10 | 16 | 12 | 13 | 24 | 7 | 8 |
| 11 | 16 | 2 | 11 | 23 | 12 | 18 |
| 12 | 13 | 17 | 2 | 22 | 12 | 18 |
| 13 | 17 | 11 | 2 | 21 | 12 | 18 |
| 14 | 16 | 13 | 19 | 22 | 3 | 10 |
| 15 | 18 | 12 | 13 | 7 | 14 | 22 |
| 16 | 16 | 12 | 11 | 1 | 18 | 22 |
| 17 | 17 | 13 | 3 | 22 | 12 | 18 |
| 18 | 6 | 12 | 1 | 22 | 13 | 17 |
| 19 | 16 | 12 | 13 | 15 | 2 | 23 |
| 20 | 18 | 24 | 23 | 19 | 12 | 17 |
| 21 | 18 | 24 | 2 | 17 | 0 | 23 |
| 22 | 17 | 3 | 4 | 22 | 2 | 13 |
| 23 | 18 | 12 | 19 | 23 | 3 | 15 |
| 24 | 18 | 12 | 19 | 23 | 3 | 10 |
| 25 | 6 | 12 | 18 | 24 | 13 | 19 |
| 26 | 6 | 12 | 2 | 21 | 13 | 18 |
| 27 | 17 | 11 | 1 | 22 | 2 | 18 |
| 28 | 16 | 17 | 3 | 11 | 12 | 23 |
| 29 | 8 | 12 | 19 | 23 | 11 | 24 |
| 30 | 16 | 13 | 7 | 23 | 12 | 19 |
| 31 | 6 | 12 | 1 | 11 | 18 | 22 |
| 32 | 17 | 11 | 1 | 21 | 12 | 18 |
| 33 | 6 | 11 | 17 | 21 | 12 | 18 |
| 34 | 8 | 11 | 14 | 17 | 12 | 22 |
| 35 | 6 | 12 | 11 | 21 | 14 | 16 |
| 36 | 6 | 12 | 11 | 1 | 17 | 21 |
| 37 | 6 | 12 | 11 | 2 | 17 | 21 |
| 38 | 6 | 11 | 21 | 1 | 12 | 17 |
| 39 | 16 | 12 | 11 | 7 | 1 | 5 |
| 40 | 8 | 12 | 19 | 24 | 11 | 17 |
| 41 | 18 | 13 | 1 | 22 | 2 | 24 |
| 42 | 6 | 2 | 17 | 21 | 19 | 22 |
| 43 | 16 | 12 | 11 | 19 | 8 | 15 |

(continued)

| MTS set index | Transform kernel candidate index | | | | | |
|---|---|---|---|---|---|---|
| | 0 | 1 | 2 | 3 | 4 | 5 |
| 44 | 8 | 12 | 17 | 24 | 13 | 15 |
| 45 | 6 | 12 | 19 | 21 | 17 | 18 |
| 46 | 6 | 12 | 13 | 21 | 2 | 18 |
| 47 | 16 | 2 | 17 | 21 | 1 | 11 |
| 48 | 6 | 17 | 19 | 23 | 12 | 16 |
| 49 | 6 | 12 | 14 | 17 | 8 | 22 |
| 50 | 6 | 7 | 11 | 21 | 9 | 12 |
| 51 | 16 | 12 | 11 | 1 | 7 | 21 |
| 52 | 6 | 12 | 11 | 1 | 17 | 21 |
| 53 | 6 | 12 | 11 | 21 | 1 | 16 |
| 54 | 8 | 7 | 9 | 11 | 12 | 21 |
| 55 | 6 | 12 | 7 | 11 | 14 | 21 |
| 56 | 6 | 12 | 7 | 11 | 1 | 21 |
| 57 | 16 | 12 | 11 | 1 | 2 | 21 |
| 58 | 6 | 11 | 17 | 21 | 1 | 12 |
| 59 | 6 | 12 | 7 | 11 | 9 | 21 |
| 60 | 18 | 12 | 14 | 21 | 6 | 21 |
| 61 | 16 | 11 | 1 | 22 | 2 | 17 |
| 62 | 16 | 11 | 1 | 22 | 2 | 17 |
| 63 | 16 | 13 | 15 | 7 | 14 | 19 |
| 64 | 8 | 12 | 1 | 19 | 16 | 23 |
| 65 | 6 | 12 | 7 | 9 | 13 | 21 |
| 66 | 6 | 12 | 13 | 2 | 7 | 18 |
| 67 | 16 | 12 | 1 | 21 | 11 | 17 |
| 68 | 16 | 11 | 7 | 19 | 12 | 15 |
| 69 | 8 | 12 | 7 | 11 | 14 | 21 |
| 70 | 6 | 12 | 7 | 11 | 8 | 9 |
| 71 | 6 | 12 | 7 | 11 | 2 | 21 |
| 72 | 6 | 12 | 1 | 11 | 21 | 22 |
| 73 | 6 | 7 | 11 | 16 | 9 | 12 |
| 74 | 6 | 12 | 7 | 11 | 9 | 21 |
| 75 | 6 | 12 | 7 | 11 | 13 | 17 |
| 76 | 6 | 12 | 11 | 21 | 2 | 7 |
| 77 | 6 | 12 | 1 | 11 | 2 | 7 |
| 78 | 6 | 12 | 7 | 11 | 16 | 21 |
| 79 | 6 | 12 | 7 | 11 | 9 | 16 |

Table 5 shows transform kernel candidates included in each MTS set described in Table 4. Each MTS set may be composed of six transform kernel candidates. The transform kernel candidate index has a value of one of 0 to 5 and may indicate one of the six transform kernel candidates. Here, each transform kernel candidate may be a combination of a horizontal transform kernel and a vertical transform kernel for a separable transform, and 25 transform kernel candidates having indices of 0 to 24 may be defined.

[Table 6]

| Kernel Combination Index | when the value of the intra prediction mode is less than 35 | when the value of the intra prediction mode is greater than or equal to 35 |
|---|---|---|
| 0 | (DCT-8, DCT-8) | (DCT-8, DCT-8) |
| 1 | (DST-7, DCT-8) | (DCT-8, DST-7) |
| 2 | (DCT-5, DCT-8) | (DCT-8, DCT-5) |
| 3 | (DST-4, DCT-8) | (DCT-8, DST-4) |
| 4 | (DST-1, DCT-8) | (DCT-8, DST-1) |
| 5 | (DCT-8, DST-7) | (DST-7, DCT-8) |
| 6 | (DST-7, DST-7) | (DST-7, DST-7) |
| 7 | (DCT-5, DST-7) | (DST-7, DCT-5) |
| 8 | (DST-4, DST-7) | (DST-7, DST-4) |
| 9 | (DST-1, DST-7) | (DST-7, DST-1) |
| 10 | (DCT-8, DCT-5) | (DCT-5, DCT-8) |
| 11 | (DST-7, DCT-5) | (DCT-5, DST-7) |
| 12 | (DCT-5, DCT-5) | (DCT-5, DCT-5) |
| 13 | (DST-4, DCT-5) | (DCT-5, DST-4) |
| 14 | (DST-1, DCT-5) | (DCT-5, DST-1) |
| 15 | (DCT-8, DST-4) | (DST-4, DCT-8) |
| 16 | (DST-7, DST-4) | (DST-4, DST-7) |
| 17 | (DCT-5, DST-4) | (DST-4, DCT-5) |
| 18 | (DST-4, DST-4) | (DST-4, DST-4) |
| 19 | (DST-1, DST-4) | (DST-4, DST-1) |
| 20 | (DCT-8, DST-1) | (DST-1, DCT-8) |
| 21 | (DST-7, DST-1) | (DST-1, DST-7) |
| 22 | (DCT-5, DST-1) | (DST-1, DCT-5) |
| 23 | (DST-4, DST-1) | (DST-1, DST-4) |
| 24 | (DST-1, DST-1) | (DST-1, DST-1) |

Table 6 is an example of the 25 transform kernel candidates described in Table 5. Specifically, the horizontal transform and vertical transform of the transform kernel candidate are expressed as (horizontal transform, vertical transform). For each transform kernel candidate index, the horizontal/vertical transform when the intra prediction mode is less than 35 may be the opposite of the horizontal/vertical transform when the intra prediction mode is greater than or equal to 35. When the value of the intra prediction mode is greater than or equal to 35, a mode symmetrical with respect to mode 34 may be derived, and an MTS set may be selected from Table 4 based on the mode. In addition, the symmetry of the block shape may be additionally considered. When the original transform block has a WxH size, the original transform block may be considered to have a HxW size by symmetrizing it, and an MTS set may be selected from Table 4. Here, the value of the intra prediction mode may be the value of the modified intra prediction mode. That is, as a mode value for WAIP, for from -14 (or -15) to -1, it is modified to mode 2, for from 67 to 80 (or 81), it is modified to mode 66, and for the remaining modes, the value of the original intra prediction mode may be set as the value of the modified intra prediction mode. In this case, since the extended modes for WAIP are also configured symmetrically with respect to mode 34, the symmetry with respect to mode 34 may be used for all directional modes except for the Planar mode and the DC mode.

For example, when a 16x32 block is predicted based on mode 54, mode 14 (=68-54) may be derived as a mode symmetrical to mode 54, and the block size may be regarded as 32x16. In this case, an MTS set with an index of 72 may be selected, as defined in Table 4.

When the MIP mode is applied, the MTS set assigned to the MIP mode may be selected based on the size of the current block without considering the symmetry of the block shape. Alternatively, when the MIP mode is applied, the MTS set assigned to the MIP mode may be selected based on the symmetrical block size considering the symmetry of the block shape. For example, when the MIP mode is applied for an 8x16 block, the 8x16 block may be regarded as a 16x8 block symmetrical to this, and an MTS set having an index of 49 may be selected as defined in Table 4. Alternatively, when the MIP mode is applied, the intra prediction mode may be regarded as the Planar mode. In this case, the MTS set assigned to the MIP mode may be selected based on the size of the current block without considering the symmetry of the block shape. Alternatively, the MTS set assigned to the MIP mode may be selected based on the symmetrical block size considering the symmetry of the block shape.

For MIP mode, a flag may be used to indicate whether the MIP mode is applied in transpose mode. When the MIP mode is applied to the current block of MxN and the flag indicates that the transpose mode is applied, the intra prediction mode may be regarded as Planar mode, and the current block of MxN may be regarded as an NxM block. That is, from Table 4, an MTS set corresponding to the block size of NxM and the Planar mode may be selected. As described in Table 6, when the value of the intra prediction mode is greater than or equal to 35, the horizontal transform and the vertical transform are swapped, but since the intra prediction mode of the current block is regarded as the Planar mode, the horizontal transform and the vertical transform of the transform kernel candidate may not be swapped. Alternatively, when the MIP mode is applied to the current block of MxN and the flag indicates that the transpose mode is applied, the intra prediction mode may not be regarded as the Planar mode, and the current block of MxN may be regarded as an NxM block. That is, from Table 4, an MTS set corresponding to the block size of NxM and the MIP mode may be selected.

In Table 5, a transform kernel candidate selected by a transform kernel candidate index may be set as a transform kernel of the current block. Alternatively, based on the size of the current block, at least one of a horizontal transform or a vertical transform of the selected transform kernel candidate may be changed to another transform kernel. For example, when the transform kernel candidate index is 3 and both the width and the height of the current block are less than or equal to 16, at least one of a horizontal transform or a vertical transform of the transform kernel candidate corresponding to the transform kernel candidate index of 3 may be changed to another transform kernel. In this case, the horizontal transform and the vertical transform may be changed independently of each other. When the difference (or the absolute value of the difference) between the value of the intra prediction mode of the current block and the value of the horizontal mode is less than or equal to a predetermined threshold, the vertical transform of the selected transform kernel candidate may be changed to IDT (identity transform). When the difference (or the absolute value of the difference) between the value of the intra prediction mode of the current block and the value of the vertical mode is less than or equal to a predetermined threshold, the horizontal transform of the selected transform kernel candidate may be changed to IDT (identity transform). Here, the threshold may be determined based on the width and height of the current block, as shown in Table 7 below.

[Table 7]

| Block size | | Threshold |
|---|---|---|
| width | height | |
| 4 | 4 | 8 |
| 4 | 8 | 6 |
| 4 | 16 | 4 |
| 8 | 4 | 8 |
| 8 | 8 | 8 |
| 8 | 16 | 6 |
| 16 | 4 | 4 |
| 16 | 8 | 2 |
| 16 | 16 | -1 |

Table 7 is for changing the horizontal transform and/or vertical transform of a transform kernel candidate selected by a transform kernel candidate index to another transform kernel and defines thresholds according to the size of a transform block.

Six transform kernel candidates composing one MTS set may be distinguished by transform kernel candidate indices from 0 to 5 as defined in Table 5. The transform kernel candidate index may be signaled via a bitstream. A flag indicating whether the MTS set is available/applied (MTS enabled flag or MTS flag) may be signaled, and a transform kernel candidate index may be signaled when the flag indicates that the MTS set is available/applied. The MTS flag may be composed of one bin, and one or more contexts for CABAC-based entropy coding (hereinafter, referred to as CABAC contexts) may be assigned to the bin. For example, different CABAC contexts may be assigned for non-MIP mode and MIP mode, respectively.

Based on the context of the current block described above, the number of transform kernel candidates available for the current block may be set differently. For example, as the context of the current block, the sum of the absolute values of all or some of the transform coefficients in the current block may be considered. The sum of the absolute values of the transform coefficients is referred to as AbsSum. When AbsSum is less than or equal to T1, only one transform kernel candidate corresponding to the transform kernel candidate index of 0 may be available. When AbsSum is greater than T1 and less than or equal to T2, four transform kernel candidates corresponding to the transform kernel candidate indices of 0 to 3 may be available. When AbsSum is greater than T2, six transform kernel candidates corresponding to the transform kernel candidate indices of 0 to 5 may be available. Here, T1 may be 6 and T2 may be 32, but this is only an example.

When AbsSum is less than or equal to T1, since the number of transform kernel candidates available for the current block is 1, the transform kernel candidate corresponding to the transform kernel candidate index of 0 may be set as the transform kernel of the current block without signaling the transform kernel candidate index. When AbsSum is greater than T1 and less than or equal to T2, since four transform kernel candidates are available, one of the four transform kernel candidates may be selected based on the transform kernel candidate index with two bins. That is, the transform kernel candidate indices of 0 to 3 may be signaled as 00, 01, 10, and 11, respectively. For the two bins, the MSB (Most Significant Bit) may be signaled first and the LSB (Least Significant Bit) may be signaled later. Different CABAC contexts may be assigned to each bin. For example, a CABAC context other than the CABAC context assigned for the MTS flag may be assigned to each bin for the two bins. Alternatively, bypass coding may be applied without assigning a CABAC context to the two bins. When AbsSum is greater than T2, the transform kernel candidate index has a value from 0 to 5, so the transform kernel candidate index cannot be expressed with only two bins. In this case, the transform kernel candidate index may be expressed by assigning two or more bins, such as truncated binary coding. For each bin assigned by the truncated binary coding method, a CABAC context may be assigned, or bypass coding may be applied without assigning a CABAC context. Alternatively, a CABAC context may be assigned to some of the plurality of bins (e.g., the first bin, or the first and second bins), and bypass coding may be applied to the remaining bins.

Embodiment 3

The transform kernel of the current block may be determined based on a transform set including one or more transform kernel candidates. The transform kernel of the current block may be derived as one of one or more transform kernel candidates belonging to the transform set.

The process of determining the transform kernel of the current block may include at least one of 1) the process of determining the transform set of the current block or 2) the process of selecting one transform kernel candidate from the transform set of the current block. The process of determining the transform set may be the process of selecting one of a plurality of transform sets that are identically pre-defined in the encoding apparatus and the decoding apparatus. Alternatively, the process of determining the transform set may be a process of configuring one or more transform sets available for the current block from among a plurality of transform sets that are identically pre-defined in the encoding apparatus and the decoding apparatus, and selecting one of the configured transform sets. Alternatively, the process of determining the transform set may be a process of configuring one transform set based on a transform kernel candidate available for the current block from among a plurality of transform kernel candidates that are identically pre-defined in the encoding apparatus and the decoding apparatus.

When the transform set of the current block includes a plurality of transform kernel candidates, a process of selecting one of the plurality of transform kernel candidates for the current block may be performed. However, when the transform set of the current block includes one transform kernel candidate (i.e., when the number of transform kernel candidates available for the current block is 1), the transform kernel of the current block may be set to the corresponding transform kernel candidate.

The transform set according to the present disclosure may mean the (non-separable) transform set in the above-described Embodiment 1, or may mean the MTS set in the Embodiment 2. Alternatively, the transform set may be defined separately from the (non-separable) transform set in Embodiment 1 or the MTS set in Embodiment 2. In this case, the transform set may include one or more specific transform kernels as transform kernel candidates. One specific transform kernel may be defined as a pair of a transform kernel for horizontal transform and a transform kernel for vertical transform, or may be defined as one transform kernel that is applied equally to horizontal and vertical transforms. Hereinafter, the specific transform kernel will be described in detail.

A specific transform kernel according to the present disclosure may be a transform kernel that is identically pre-defined in an encoding apparatus and a decoding apparatus. Alternatively, the specific transform kernel may further include a transform kernel derived based on the above-described pre-defined transform kernel. Alternatively, the specific transform kernel may mean a transform kernel having a predetermined index within the (non-separable) transform set of Embodiment 1 or the MTS set of Embodiment 2.

The specific transform kernel may be defined as a combination of trigonometric function-based transform kernels (e.g., DCT-2, DST-7, DCT-8, DCT-5, DST-4, DST-1). Alternatively, the specific transform kernel may be defined as a combination of non-trigonometric function-based transform kernels. Here, examples of the non-trigonometric function-based transform kernels may include KLT, SOT, orthogonal transform kernel, non-orthogonal transform kernel, etc. KLT may be denoted as a transform kernel trained with training feature data, i.e., a train-based transform kernel. Alternatively, the specific transform kernel may be defined as a combination of a trigonometric function-based transform kernel and a non-trigonometric function-based transform kernel.

For example, a specific transform kernel is denoted as (T_h, T_v). This a horizontal transform kernel, which may be a train-based transform kernel such as KLT. T_v is a vertical transform kernel, which may be a trigonometric-based transform kernel such as DCT-2. Alternatively, T_h may be KLT, and T_v may be DST-7. Alternatively, when DST-7 and DCT-2 are allowed for T_h and $KLT_1$ and $KLT_2$ corresponding to KLT are allowed for T_v, four specific transform kernels may be defined by combinations of the allowed transform kernels.

The specific transform kernel or the transform set based on the specific transform kernel may be used in a manner to replace the (non-separable) transform set of Embodiment 1 and/or the MTS set of Embodiment 2. Alternatively, it may be added as a transform set independent of the (non-separable) transform set of Embodiment 1 and/or the MTS set of Embodiment 2.

A flag may be defined to indicate whether a transform set based on a specific transform kernel is applied. When the flag is a first value, a transform set based on a specific transform kernel may be applied, and when the flag is a second value, a (non-separable) transform set of Embodiment 1 or an MTS set of Embodiment 2 may be applied. The flag may be signaled before a syntax element specifying at least one transform kernel candidate in the transform set. For example, when the flag is the first value, a transform set based on a specific transform kernel may be applied, and an index indicating one of a plurality of specific transform kernels belonging to the transform set may be additionally signaled. On the other hand, when the flag is the second value, the (non-separable) transform set of Embodiment 1 or the MTS set of Embodiment 2 may be applied, and an index (i.e., a transform kernel candidate index) indicating one of a plurality of transform kernel candidates may be additionally signaled.

The specific transform kernel may be applied only to the luma component of the current block, or may be applied to both the luma component and the chroma component of the current block.

A specific transform kernel according to the present disclosure may be defined as a length-based transform kernel. That is, the specific transform kernel may be one or more transform kernels having a predetermined length. Hereinafter, for convenience of explanation, a transform kernel having a length of K is denoted as a length-K transform kernel. Here, K may be at least one of integers 4, 8, 16, 32, 64 or more. Here, the length may mean the length of one side (width and/or height) that a transform block may have. In the present disclosure, the width that a transform block may have may be referred to as an allowable width(s) and the height that a transform block may have may be referred to as an allowable height(s). When a separable transform is applied to a current block of MxN size, a length-M transform kernel having a length equal to the width of the current block may be applied in the horizontal direction, and a length-N transform kernel having a length equal to the height of the current block may be applied in the vertical direction.

The separable transform may be applied to MxN blocks of all size by assigning transform kernels by length. For example, when the current block is 4xN, a length-4 transform kernel having a length equal to the width of the current block may be applied in the horizontal direction. When the current block is Nx4, a length-4 transform kernel having a length equal to the height of the current block may be applied in the vertical direction. Here, N may be an integer of 4, 8, 16, 32, 64, or more.

The length-based transform kernels may be configured differently for the horizontal and vertical directions. That is, the length-4 horizontal transform kernel and the length-4 vertical transform kernel may be different from each other. When the number of allowable widths of a transform block is P and the number of allowable widths of a transform block is Q, one transform set may be configured with (P+Q) length-based transform kernels. For example, when the allowable widths and allowable heights of a transform block are 4, 8, 16, and 32, respectively, a length-4 transform kernel, a length-8 transform kernel, a length-16 transform kernel, and a length-32 transform kernel may be available for the horizontal and vertical directions. In this case, the valud of P and the value of Q may be each 4, and a single transform set may be configured based on a total of eight length-based transform kernels. In this case, the eight length-based transform kernels may be a length-4 horizontal transform kernel, a length-8 horizontal transform kernel, a length-16 horizontal transform kernel, a length-32 horizontal transform kernel, a length-4 vertical transform kernel, a length-8 vertical transform kernel, a length-16 vertical transform kernel, and a length-32 vertical transform kernel.

Even if the transform kernels are applied in the same direction and have the same length, the transform kernel applied to the current block may be different based on the size of the current block. Here, the size of the current block may be defined as one of the width, the height, the sum of the width and the height, the product of the width and the height, or the maximum/minimum value of the width and the height of the current block. A length-M horizontal transform kernel may be assigned for each allowable height of the transform block. Similarly, a length-N vertical transform kernel may be assigned for each allowable width of the transform block. Here, when both M and N may have values of 4, 8, 16, 32, different length-M horizontal transform kernels may be assigned to Mx4, Mx8, Mx16, and Mx32 blocks, respectively, and different length-N vertical transform kernels may be assigned to 4xN, 8xN, 16xN, and 32xN blocks, respectively. For example, a length-4 horizontal transform kernel applied to a 4x8 block may be different from a length-4 horizontal transform kernel applied to a 4x16 block.

Alternatively, the allowable widths and allowable heights of the transform block may be divided into a plurality groups, and the same length-based transform kernel may be assigned to each group.

For example, the allowable widths and allowable heights of a transform block may be divided into two groups based on a predetermined threshold. In an MxN block, when the value of N is less than or equal to the first threshold, a first length-M horizontal transform kernel may be assigned, and when the value of N is greater than the first threshold, a second length-M horizontal transform kernel may be assigned. Here, the first length-M horizontal transform kernel and the second length-M horizontal transform kernel may have the same length but may be different transform kernels. The first threshold may be an integer of 8, 16, or more. Similarly, in the MxN block, when the value of M is less than or equal to the second threshold, a first length-N vertical transform kernel may be assigned, and when the value of M is greater than the second threshold, a second length-N vertical transform kernel may be assigned. Here, the first length-N vertical transform kernel and the second length-N vertical transform kernel may have the same length but may be different transform kernels. The second threshold may be an integer of 8, 16, or more.

Alternatively, the allowable widths and allowable heights of the transform block may be divided into three or more groups based on at least two thresholds. Here, it is assumed that the allowable widths and allowable heights of the transform block are 4, 8, 16, and 32, and they are divided into three groups, namely, {4, 8}, {16}, and {32}. When the value of N in the current block of the MxN size is 4 and 8, the first length-M horizontal transform kernel may be assigned. When the value of N is 16, the second length-M horizontal transform kernel may be assigned. When the value of N is 32, the third length-M horizontal transform kernel may be assigned. Similarly, when the value of M is 4 and 8, the first length-N vertical transform kernel may be assigned. When the value of M is 16, the second length-N vertical transform kernel may be assigned. When the value of M is 32, the third length-N vertical transform kernel may be assigned. In this way, one of the first to third length-M horizontal transform kernels may be applied based on the height of the current block, and one of the first to third length-N vertical transform kernels may be applied based on the width of the current block. Nine specific transform kernels may be configured through combinations of the first to third length-M horizontal transform kernels and the first to third length-N vertical transform kernels described above, and one transform set for the current block may be configured with the nine specific transform kernels.

Alternatively, length-based transform kernels may not be configured separately for horizontal and vertical directions. That is, a transform kernel having a length corresponding to the width or height may be applied regardless of the horizontal and vertical directions. For example, a length-4 transform kernel applied in the horizontal direction of a 4x8 block and a length-4 transform kernel applied in the vertical direction of an 8x4 block may be the same.

Regardless of the horizontal and vertical directions, when a length-M transform kernel having the same length as a side having length M is applied, only one transform kernel may be required for each of the lengths of the allowable widths and/or the allowable heights of the transform block. For example, when the allowable widths or the allowable heights of the transform block is 4, 8, 16 and 32, a transform set may be configured based on four length-based transform kernels. Here, the four length-based transform kernels may be a length-4 transform kernel, a length-8 transform kernel, a length-16 transform kernel and a length-32 transform kernel. When the current block is an MxN block, a length-M transform kernel may be applied for the horizontal direction and a length-N transform kernel may be applied in the vertical direction.

Based on the context of the current block, the application of the length-based transform kernel may be restricted, or the number of length-based transform kernels available to the current block may be different. Hereinafter, for convenience of explanation, it is assumed that the length-based transform kernel is a non-trigonometric function-based transform kernel such as the KLT described above, but is not limited thereto.

A non-trigonometric function-based transform kernel may be applied to a direction of a side having a specific length, and a trigonometric function-based transform kernel may be applied to another length. Here, the specific length may be determined based on a length that is identically pre-defined for an encoding apparatus and a decoding apparatus. A non-trigonometric function-based transform kernel may be applied to one of a horizontal direction or a vertical direction, and a trigonometric function-based transform kernel may be applied to the other direction.

For example, when the length of a side of the current block is greater than or equal to 8, a non-trigonometric function-based transform kernel may be applied to the side, otherwise, a trigonometric function-based transform kernel may be applied to the side. Alternatively, when the length of a side of the current block is less than 8, a non-trigonometric function-based transform kernel may be applied to the side, otherwise, a trigonometric function-based transform kernel may be applied to the side. Alternatively, when the length of a side of the current block is less than or equal to 16, a non-trigonometric function-based transform kernel may be applied to the side, otherwise a trigonometric function-based transform kernel may be applied to the side. Alternatively, when the length of a side of the current block is greater than 16, a non-trigonometric function-based transform kernel may be applied to the side, otherwise a trigonometric function-based transform kernel may be applied to the side. In this way, in a case where a non-trigonometric function-based transform kernel is restricted from being applied to a side of length p, the following two methods may be considered for the block where one of the width or the height is p and the other is not p.

(1) A first method in which a non-trigonometric function-based transform kernel is not applied to a direction having a length of p among width or height, and a non-trigonometric function-based transform kernel is applied to a direction not having a length of p.
(2) A second method in which no non-trigonometric function-based transform kernel is applied for the horizontal and vertical directions when either the width or the height has a length of p.

For example, length-4 non-trigonometric function-based transform kernels may be restricted from being applied.

According to the first method, in case of a block whose width or height is 4, a length-4 non-trigonometric function-based transform kernel is not applied to the direction of a side whose length is 4, but a length-4 trigonometric function-based transform kernel may be applied. Meanwhile, for the direction of a side whose length is not 4, a non-trigonometric function-based transform kernel corresponding to the corresponding length may be applied. That is, a length-4 non-trigonometric function-based transform kernel may not be applied to a 4x4 block. For 4x8, 4x16, 4x32, 8x4, 16x4, or 32x4 block, a non-trigonometric function-based transform kernel corresponding to the length may be applied only to a side whose length is not 4. For blocks of other sizes (e.g., 8x8, 8x16, 8x32, 16x8, 16x16, 16x32, 32x8, 32x16, 32x32, etc.), a non-trigonometric function-based transform kernel corresponding to the length may be applied in the horizontal and vertical directions.

Alternatively, according to the second method, the non-trigonometric function-based transform kernel corresponding to the length may be applied only when both the width and the height of the current block are greater than 4. In other words, when either the width or the height has a length of 4, the length-4 non-trigonometric function-based transform kernel may not be applied for the horizontal and vertical directions.

Alternatively, length-4 and length-8 non-trigonometric function-based transform kernels may be restricted from being applied.

According to the first method, for 4x4, 4x8, 8x4, and 8x8 blocks, length-4 and length-8 non-trigonometric function-based transform kernels may not be applied, and length-4 and length-8 trigonometric function-based transform kernels may be applied. For 4x16, 4x32, 8x16, 8x32, 16x4, 16x8, 32x4, and 32x8 blocks, non-trigonometric function-based transform kernel corresponding to the length may be applied only to a side whose length is not 4 and 8. For blocks of other sizes (e.g., 16x16, 16x32, 32x16, 32x32, etc.), non-trigonometric function-based transform kernel corresponding to the length may be applied in the horizontal and vertical directions.

According to the second method, the non-trigonometric function-based transform kernel corresponding to the length may be applied only when both the width and the height of the current block are greater than 8 (e.g., 16x16, 16x32, 32x16, or 32x32 blocks, etc.). In other words, when either the width or the height has length 4 or 8, the length-4 and length-8 non-trigonometric function-based transform kernels may not be applied for the horizontal and vertical directions.

Alternatively, length-32 non-trigonometric function-based transform kernels may be restricted from being applied.

According to the first method, for a 32x32 block, a length-32 non-trigonometric function-based transform kernel may not be applied, but a length-32 trigonometric function-based transform kernel may be applied. For 4x32, 8x32, 16x32, 32x4, 32x8, and 32x16 blocks, a non-trigonometric function-based transform kernel corresponding to the length may be applied only to a side whose length is not 32. For blocks of other sizes (e.g., 4x4, 4x8, 4x16, 8x4, 8x8, 8x16, 16x4, 16x8, 16x16), a non-trigonometric function-based transform kernel corresponding to the length may be applied for the horizontal and vertical directions.

According to the second method, the non-trigonometric function-based transform kernel corresponding to the length may be applied only when both the width and the height of the current block are less than 32. That is, for 4x32, 8x32, 16x32, 32x4, 32x8, 32x16, or 32x32 block, the length-32 non-trigonometric function-based transform kernel may not be applied in the horizontal and vertical directions. For blocks of other sizes (e.g., 4x4, 4x8, 4x16, 8x4, 8x8, 8x16, 16x4, 16x8, 16x16), the non-trigonometric function-based transform kernel corresponding to the length may be applied in the horizontal and vertical directions.

The above-described embodiment may be adaptively performed based on the slice type of the current block. For example, when the slice type is an I slice, the above-described example may be applied, otherwise, it may not be applied.

In addition, in the above-described embodiment, a case where the application of the non-trigonometric function-based transform kernel is restricted for a specific length is described, but this is only an example. For example, the first type of trigonometric function-based transform kernel may be restricted from being applied for a specific length. In this case, the second type of trigonometric function-based transform kernel may be applied. That is, in the above-described embodiment, the non-trigonometric function-based transform kernel and the trigonometric function-based transform kernel may be understood as being replaced with the first type of trigonometric function-based transform kernel and the second type of trigonometric function-based transform kernel. The second type may be a heterogeneous transform type different from the first type.

The transform kernel of the current block may be determined based on any one of Embodiments 1 to 3 described above. Alternatively, the transform kernel of the current block may be determined based on a combination of at least two of Embodiments 1 to 3, within a range where the inventions according to Embodiments 1 to 3 described above do not conflict with each other.

Referring to FIG. 4, the current block may be reconstructed based on the residual samples of the current block (S420).

The prediction samples of the current block may be derived based on the intra prediction mode of the current block. The reconstructed samples of the current block may be generated based on the prediction samples and the residual samples of the current block.

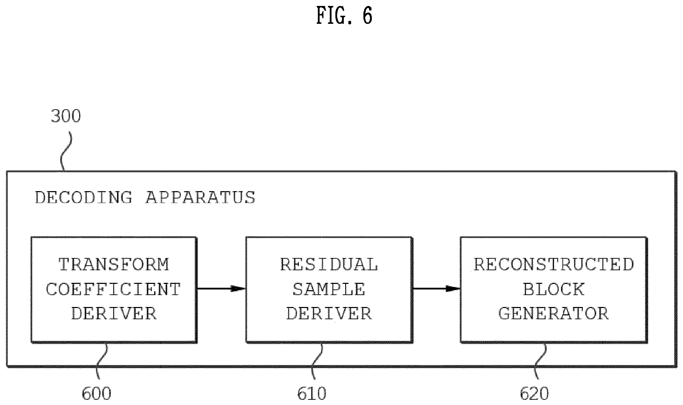

FIG. 6 illustrates a schematic configuration of a decoding apparatus (300) that performs an image decoding method according to the present disclosure.

Referring to FIG. 6, the decoding apparatus (300) according to the present disclosure may include a transform coefficient deriver (600), a residual sample deriver (610), and a reconstructed block generator (620). The transform coefficient deriver (600) may be configured in the entropy decoder (310) of FIG. 3, the residual sample deriver (610) may be configured in the residual processor (320) of FIG. 3, and the reconstructed block generator (620) may be configured in the adder (340) of FIG. 3.

The transform coefficient deriver (600) may obtain residual information of the current block from the bitstream and decode it to derive the transform coefficients of the current block.

The residual sample deriver (610) may derive the residual samples of the current block by performing at least one of dequantization or inverse transform on the transform coefficients of the current block.

The residual sample deriver (610) may determine a transform kernel for the inverse transform of the current block through a predetermined transform kernel determination method, and derive the residual samples of the current block based on this. The transform kernel determination method is as described with reference to FIG. 4, and a detailed description thereof will be omitted here.

The reconstructed block generator (620) may reconstruct the current block based on the residual samples of the current block.

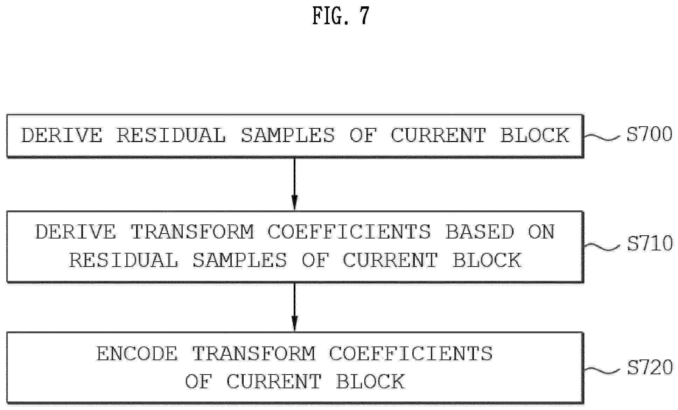

FIG. 7 illustrates an image encoding method performed by an encoding apparatus (200) according to an embodiment of the present disclosure.

Referring to FIG. 7, residual samples of a current block may be derived (S700).

The residual samples of the current block may be derived by subtracting prediction samples from original samples of the current block. Here, the prediction samples may be derived based on a predetermined intra prediction mode.

Referring to FIG. 7, transform coefficients of the current block may be derived by performing at least one of transform or quantization on the residual samples of the current block (S710).

The method for determining the transform kernel for the transform is as described with reference to FIG. 4, and a detailed description thereof will be omitted here. That is, the transform kernel for the transform may be determined based on at least one of the above-described Embodiments 1 to 3.

For example, as in Embodiment 1, one or more transform sets for transform of the current block may be defined/configured, and each transform set may include one or more transform kernel candidates. In this case, one from the plurality of transform sets may be selected as the transform set of the current block. One of the plurality of transform kernel candidates belonging to the transform set of the current block may be selected. The selection may be performed implicitly based on the context of the current block. Alternatively, an optimal transform set and/or transform kernel candidate for the current block may be selected, and an index indicating it may be signaled.

Alternatively, as in Embodiment 2, the transform kernel of the current block may be determined based on an MTS set. One of a plurality of MTS sets may be selected based on at least one of a size or an intra prediction mode of the current block. The selected MTS set may include one or more transform kernel candidates. One of the one or more transform kernel candidates may be selected, and the transform kernel of the current block may be determined based on the selected transform kernel candidate. The selection of the transform kernel candidate may be performed using a transform kernel candidate index derived based on the context of the current block. Alternatively, an optimal transform kernel candidate for the current block may be selected, and a transform kernel candidate index indicating the selected transform kernel candidate may be signaled.

Alternatively, as in Embodiment 3, the transform kernel of the current block may be determined based on a transform set consisting of one or more specific transform kernels.

Alternatively, the transform kernel of the current block may be determined based on a combination of at least two of Embodiments 1 to 3.

Referring to FIG. 7, a bitstream may be generated by encoding the transform coefficients of the current block (S720).

Residual information on the transform coefficients may be generated based on the transform coefficients of the current block, and a bitstream may be generated by encoding the residual information.

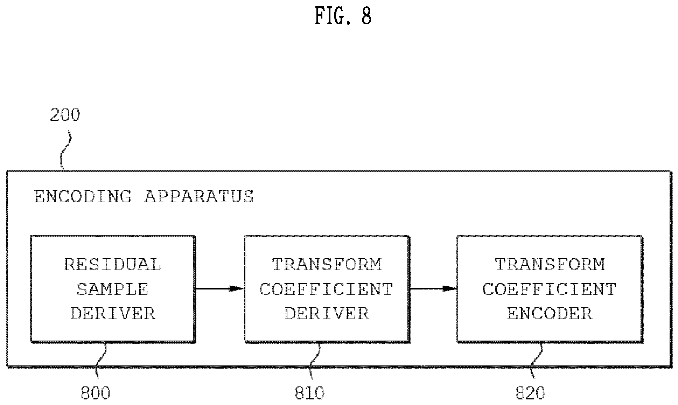

FIG. 8 illustrates a schematic configuration of an encoding apparatus (200) that performs an image encoding method according to the present disclosure.

Referring to FIG. 8, the encoding apparatus (200) according to the present disclosure may include a residual sample deriver (800), a transform coefficient deriver (810), and a transform coefficient encoder (820). The residual sample deriver (800) and the transform coefficient deriver (810) may be configured in the residual processor (230) of FIG. 2, and the transform coefficient encoder (820) may be configured in the entropy encoder (240) of FIG. 2.

The residual sample deriver (800) may derive residual samples of the current block by subtracting prediction samples from original samples of the current block. Here, the prediction samples may be derived based on a predetermined intra prediction mode.

The transform coefficient deriver (810) may derive the transform coefficients of the current block by performing at least one of transform or quantization on the residual samples of the current block. The transform coefficient deriver (810) may determine the transform kernel of the current block based on one or a combination of at least two of the above-described Embodiments 1 to 3, and may derive the transform coefficients by applying the transform kernel to the residual samples of the current block.

The transform coefficient encoder (820) may encode the transform coefficients of the current block to generate a bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through

**EP 4 604 545 A1**

a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

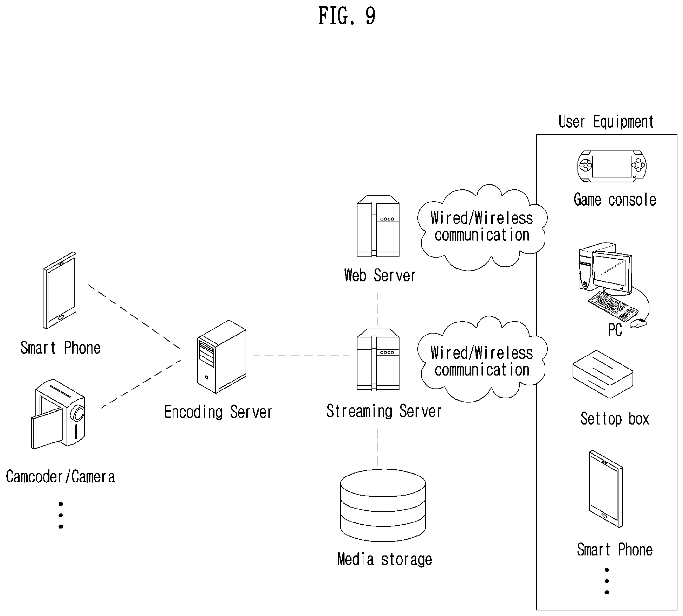

FIG. 9 shows an example of a contents streaming system to which embodiments of the present disclosure may be applied.

Referring to FIG. 9, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

   deriving transform coefficients of a current block from a bitstream;
   performing at least one of dequantization or inverse transform on the transform coefficients of the current block to derive residual samples of the current block, wherein the inverse transform is performed based on a length-based transform kernel, and the length-based transform kernel includes at least one of a horizontal transform kernel having a length equal to a width of the current block or a vertical transform kernel having a length equal to a height of the current block; and
   reconstructing the current block based on the residual samples of the current block.

2. The image decoding method of claim 1, wherein the length-based transform kernel is a non-trigonometric function-based transform kernel.

3. The image decoding method of claim 1, wherein when the width and height of the current block are equal to each other, a horizontal transform kernel applied to a horizontal direction of the current block is a same transform kernel as a vertical transform kernel applied to a vertical direction of the current block.

4. The image decoding method of claim 1, wherein when the width and height of the current block are equal to each other,

26

a horizontal transform kernel applied to a horizontal direction of the current block has a same length as a vertical transform kernel applied to a vertical direction of the current block, but is a transform kernel different from the a vertical transform kernel.

5. The image decoding method of claim 1, wherein the length-based transform kernel is assigned to allowable widths or allowable heights for a transform block, respectively.

6. The image decoding method of claim 1, wherein allowable widths or allowable heights for a transform block are divided into a plurality of groups based on at least one threshold, and
wherein the length-based transform kernel is assigned to each of the plurality of groups.

7. The image decoding method of claim 1, wherein when the width or height of the current block is equal to a pre-defined length, the horizontal transform kernel or the vertical transform kernel is not applied to the current block, and
wherein the pre-defined length is at least one of 4, 8, 16 or 32.

8. The image decoding method of claim 7, wherein when the width and height of the current block are not equal and the width of the current block is equal to the pre-defined length, a horizontal transform kernel having a length equal to the width of the current block is not applied to the current block, and a vertical transform kernel having a length equal to the height of the current block is applied to the current block.

9. The image decoding method of claim 7, wherein when the width and height of the current block are not equal and the width of the current block is equal to the pre-defined length, the length-based transform kernel is not applied to the current block.

10. An image encoding method, comprising:

deriving residual samples of a current block;
deriving transform coefficients of the current block by performing at least one of transform or quantization on the residual samples of the current block,
wherein the transform is performed based on a length-based transform kernel, and
wherein the length-based transform kernel includes at least one of a horizontal transform kernel having a length equal to a width of the current block or a vertical transform kernel having a length equal to a height of the current block; and
encoding the transform coefficients of the current block.

11. A computer-readable storage medium storing a bitstream generated by an image encoding method according to claim 10.

12. A method of transmitting data, comprising:

obtaining a bitstream for image information, wherein the bitstream is generated by deriving residual samples of a current block, deriving transform coefficients of the current block by performing at least one of transform or quantization on the residual samples of the current block, and encoding the transform coefficients of the current block; and
transmitting the data including the bitstream,
wherein the transform is performed based on a length-based transform kernel, and
wherein the length-based transform kernel includes at least one of a horizontal transform kernel having a length equal to a width of the current block or a vertical transform kernel having a length equal to a height of the current block.

FIG.1

# FIG.2

EP 4 604 545 A1

## FIG.3

DECODING APPARATUS 300

310 BITSTREAM → ENTROPY DECODER 310

DEQUANTIZER 321 — 320 — INVERSE TRANSFORMER 322

340 (+)

FILTER 350 → RECONSTRUCTED IMAGE (PICTURE)

MEMORY / DPB 360

330 — INTRA PREDICTOR 331 / INTER PREDICTOR 332

FIG.4

| DERIVE TRANSFORM COEFFICIENTS OF CURRENT BLOCK | S400 |

| DERIVE RESIDUAL SAMPLES BASED ON TRANSFORM COEFFICIENTS OF CURRENT BLOCK | S410 |

| RECONSTRUCT CURRENT BLOCK BASED ON RESIDUAL SAMPLES OF CURRENT BLOCK | S420 |

FIG. 5

# FIG. 6

300

DECODING APPARATUS

| TRANSFORM COEFFICIENT DERIVER | → | RESIDUAL SAMPLE DERIVER | → | RECONSTRUCTED BLOCK GENERATOR |
|---|---|---|---|---|

600 610 620

FIG. 7

DERIVE RESIDUAL SAMPLES OF CURRENT BLOCK — S700

DERIVE TRANSFORM COEFFICIENTS BASED ON
RESIDUAL SAMPLES OF CURRENT BLOCK — S710

ENCODE TRANSFORM COEFFICIENTS
OF CURRENT BLOCK — S720

FIG. 8

200

ENCODING APPARATUS

| RESIDUAL SAMPLE DERIVER | → | TRANSFORM COEFFICIENT DERIVER | → | TRANSFORM COEFFICIENT ENCODER |

800          810          820

FIG. 9

## INTERNATIONAL SEARCH REPORT

| International application No. |
|---|
| **PCT/KR2023/015766** |

**A. CLASSIFICATION OF SUBJECT MATTER**

**H04N 19/60**(2014.01)i; **H04N 19/18**(2014.01)i; **H04N 19/122**(2014.01)i; **H04N 19/132**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/60(2014.01); H04N 19/103(2014.01); H04N 19/105(2014.01); H04N 19/11(2014.01); H04N 19/12(2014.01); H04N 19/136(2014.01); H04N 19/61(2014.01); H04N 19/625(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 양자화(quantization), 변환(transform), 계수(coefficient), 레지듀얼(residual), 복원(reconstruction), 커널(kernel), 너비(width), 높이(height)

**C. DOCUMENTS CONSIDERED TO BE RELEVANT**

| Category* | Citation of document, with indication, where appropriate, of the relevant passages | Relevant to claim No. |
|---|---|---|
| X | WO 2020-013514 A1 (LG ELECTRONICS INC.) 16 January 2020 (2020-01-16)<br>See page 13, lines 4-7; page 15, lines 7-9; page 17, lines 19-20; page 18, lines 6-11; page 19, lines 9-15; page 20, lines 5-6; page 23, lines 6-8 and 14-19; page 42, lines 5-6, page 49, lines 12-13; page 56, lines 14-15; page 90, lines 9-10; page 104, lines 10-12 and page 117, lines 12-14; claims 1-2; and figures 1-2, 5-6b, 16, 21, 26 and 44a-45b. | 1,10-12 |
| Y | | 2-9 |
| Y | KR 10-2452745 B1 (QUALCOMM INCORPORATED) 07 October 2022 (2022-10-07)<br>See paragraphs [0021], [0135], [0161], [0190] and [0194]. | 2-6 |
| Y | KR 10-2021-0057189 A (WILUS INSTITUTE OF STANDARDS AND TECHNOLOGY INC. et al.) 20 May 2021 (2021-05-20)<br>See paragraph [0171]; and claim 2. | 7-9 |
| A | KR 10-2022-0031030 A (BRITISH BROADCASTING CORP.) 11 March 2022 (2022-03-11)<br>See claims 60-77. | 1-12 |

| ✓ Further documents are listed in the continuation of Box C. | ✓ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 January 2024** | **19 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/015766** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2020-0144511 A (ELECTRONICS AND TELECOMMUNICATIONS RESEARCH INSTITUTE) 29 December 2020 (2020-12-29)<br>See claims 1-10. | 1-12 |

Form PCT/ISA/210 (second sheet) (July 2022)

### INTERNATIONAL SEARCH REPORT
#### Information on patent family members

International application No.

**PCT/KR2023/015766**

| Patent document cited in search report | | | Publication date (day/month/year) | Patent family member(s) | | | Publication date (day/month/year) |
|---|---|---|---|---|---|---|---|
| WO | 2020-013514 | A1 | 16 January 2020 | US | 2021-0281842 | A1 | 09 September 2021 |
| KR | 10-2452745 | B1 | 07 October 2022 | CN | 107211144 | A | 26 September 2017 |
| | | | | CN | 107211144 | B | 03 January 2020 |
| | | | | EP | 3251364 | A1 | 06 December 2017 |
| | | | | JP | 2018-506905 | A | 08 March 2018 |
| | | | | JP | 6768675 | B2 | 14 October 2020 |
| | | | | KR | 10-2017-0107452 | A | 25 September 2017 |
| | | | | US | 10306229 | B2 | 28 May 2019 |
| | | | | US | 2016-0219290 | A1 | 28 July 2016 |
| | | | | WO | 2016-123091 | A1 | 04 August 2016 |
| KR | 10-2021-0057189 | A | 20 May 2021 | CN | 113196780 | A | 30 July 2021 |
| | | | | KR | 10-2023-0174294 | A | 27 December 2023 |
| | | | | US | 11539973 | B2 | 27 December 2022 |
| | | | | US | 2021-0266581 | A1 | 26 August 2021 |
| | | | | US | 2023-0100855 | A1 | 30 March 2023 |
| | | | | WO | 2020-145805 | A1 | 16 July 2020 |
| KR | 10-2022-0031030 | A | 11 March 2022 | CN | 114009022 | A | 01 February 2022 |
| | | | | EP | 3991413 | A1 | 04 May 2022 |
| | | | | US | 2022-0303536 | A1 | 22 September 2022 |
| | | | | WO | 2020-259891 | A1 | 30 December 2020 |
| KR | 10-2020-0144511 | A | 29 December 2020 | CN | 113950830 | A | 18 January 2022 |
| | | | | EP | 3989579 | A1 | 27 April 2022 |
| | | | | US | 2022-0264151 | A1 | 18 August 2022 |
| | | | | WO | 2020-256447 | A1 | 24 December 2020 |

Form PCT/ISA/210 (patent family annex) (July 2022)